# EUROPEAN PATENT APPLICATION

(11) **EP 2 402 581 A2**
(43) Date of publication of application: **04.01.2012**
(21) Application number: 11171240.2
(22) Date of filing: 23.06.2011
(51) Int. Cl.: F02C 3/30

(54) **Additive injection system for use with a turbine engine and methods of assembling same**

(30) Priority: 29.06.2010 US 826193
(71) Applicant: General Electric Company, Schenectady, NY 12345 (US)
(72) Inventor: Symonds, Richard, Grennville, SC 29615 (US)
(74) Representative: Gray, Thomas

(57) **Abstract**

An additive injection system (200) includes a water supply manifold (201), a liquid fuel connection (130) coupled in flow communication with the water supply manifold, and an additive source (206) coupled in flow communication with the water supply manifold.

## Description

### BACKGROUND OF THE INVENTION

The embodiments described herein relate generally to rotating machines and, more particularly, to turbine engine fuel nozzle assemblies.

At least some known turbine engines ignite a fuel-air mixture in a combustor to generate combustion gases that are channeled towards a turbine via a hot gas path. Known combustor assemblies include fuel nozzles that channel fuel to a combustion region of the combustor. The turbine converts thermal energy of the combustion gas stream to mechanical energy used to rotate a turbine shaft. Output of the turbine may be used to power a machine, for example, an electric generator, a compressor, or a pump.

In at least some known turbine engines, during operation, combustion of fuel and air may introduce impurities into the combustion gas stream that may adhere to portions of the combustor and to portions of the turbine engine downstream from the combustion region. Over time, such impurities may induce corrosive effects on such portions. Also, such combustion may facilitate undesired combustion byproduct formation. As a result, in at least some known turbine engines, an inhibitor may be injected into the combustion gas stream to facilitate a reduction in impurity-induced corrosion and/or undesired combustion byproduct formation. However, the additional hardware necessary to control inhibitor concentration and to inject the inhibitor increases the cost for the turbine engines to a point that the possible benefits from such injection may be outweighed by the costs. Moreover, in many known turbine engines, physical space restrictions limit access to route and install such additional hardware and to limit locating additional wall and casing penetrations.

### BRIEF SUMMARY OF THE INVENTION

In one aspect, a method for assembling an additive injection system for use with a turbine engine includes coupling a liquid fuel connection in flow communication with a water supply manifold and coupling an additive source in flow communication with the water supply manifold.

In a further aspect, an additive injection system is provided. The system includes a water supply manifold and a liquid fuel connection coupled in flow communication with the water supply manifold. The system also includes an additive source coupled in flow communication with the water supply manifold.

In another aspect, a turbine engine includes at least one combustor. The engine also includes at least one fuel nozzle assembly coupled in flow communication with the at least one combustor. The engine further includes an additive injection system coupled to the at least one fuel nozzle assembly. The additive injection system includes a water supply manifold and a liquid fuel connection coupled in flow communication with the water supply manifold. The additive injection system also includes an additive source coupled in flow communication with the water supply manifold.

### BRIEF DESCRIPTION OF THE DRAWINGS

The embodiments described herein may be better understood by referring to the following description in conjunction with the accompanying drawings.
FIG. 1 is schematic diagram of an exemplary turbine engine;
FIG. 2 is a schematic diagram of an exemplary additive injection system that may be used with the turbine engine shown in FIG.1;
FIG. 3 is a schematic diagram of an exemplary alternative additive injection system that may be used with the turbine engine shown in FIG.1; and
FIG. 4 is a flow chart illustrating an exemplary method of assembling the additive injection systems shown in FIGs. 2 and 3.

### DETAILED DESCRIPTION OF THE INVENTION

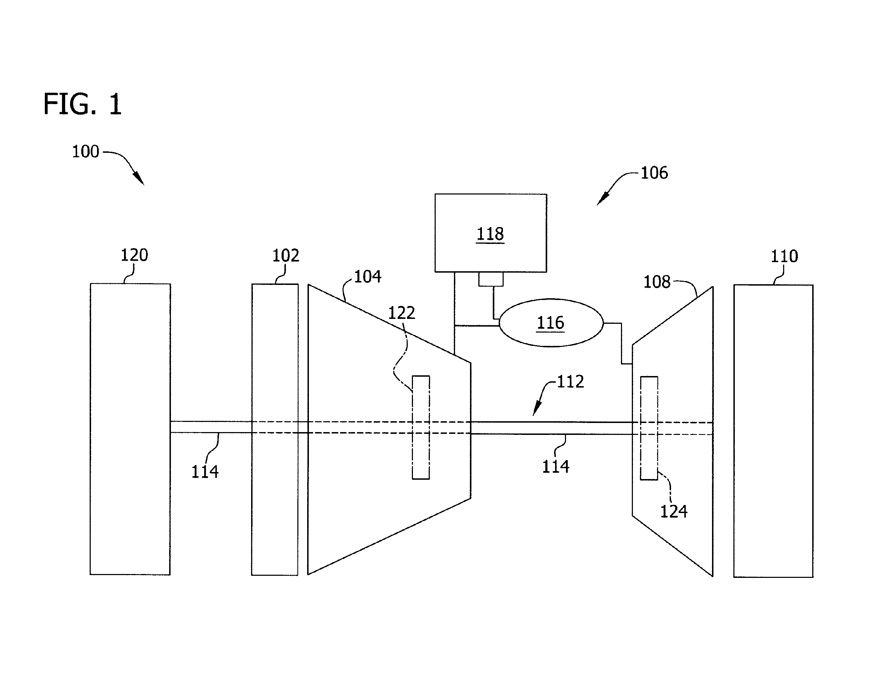

FIG. 1 is a schematic view of an exemplary turbine engine, that is, a gas turbine engine 100. In the exemplary embodiment, gas turbine engine 100 includes an air intake section 102. Gas turbine engine 100 also includes a compressor section 104 that is coupled downstream from, and in flow communication with, intake section 102. A combustor section 106 is coupled downstream from, and in flow communication with, compressor section 104, and a turbine section 108 is coupled downstream from, and in flow communication with, combustor section 106. Gas turbine engine 100 further includes an exhaust section 110 that is coupled downstream from, and in flow communication with, turbine section 108. Moreover, in the exemplary embodiment, turbine section 108 is coupled to compressor section 104 via a rotor assembly 112 that includes a drive shaft 114.

Moreover, in the exemplary embodiment, combustor section 106 includes at least one combustor 116 (only one shown in FIG. 1). More specifically, combustor section 106 is coupled to compressor section 104 such that combustor 116 is coupled in flow communication with compressor section 104. Alternatively, combustor section 106 includes a plurality of combustors 116. Combustor section 106 also includes at least one fuel nozzle assembly 118, wherein each combustor 116 is also coupled in flow communication with at least one fuel nozzle assembly 118. Further, in the exemplary embodiment, turbine section 108 and compressor section 104 are rotatably coupled to a load 120 via drive shaft 114. For example, load 120 may include, but is not limited to only including, an electrical generator and/or a mechanical drive application, e.g., a pump. Moreover, load 120 is positioned on a compressor-side of turbine engine 100. Alternatively, load 120 is positioned on a turbine-side of turbine engine 100. In the exemplary embodiment, compressor section 104 includes at least one compressor blade 122. Also, in the exemplary embodiment, turbine section 108 includes at least one turbine blade, or bucket 124. Each compressor blade 122 and each turbine bucket 124 are coupled to rotor assembly 112.

In operation, air intake section 102 channels air towards compressor section 104. Compressor section 104 compresses inlet air via compressor blades 122 to higher pressures and temperatures prior to discharging compressed air towards combustor section 106. The compressed air is mixed with fuel and ignited to generate combustion gases that are channeled towards turbine section 108. Specifically, fuel is channeled to fuel nozzle assembly 118, wherein the fuel is mixed and ignited within combustors 116. Also, specifically, a majority of compressed air is channeled towards combustors 116 to facilitate combustion of the fuel. Further, specifically, in the exemplary embodiment, at least a portion of compressed air is channeled to fuel nozzle assembly 118 for atomization purposes. Alternatively, substantially all air discharged from compressor section 104 is channeled towards combustors 116 and substantially no air is channeled towards fuel nozzle assembly 118.

Also, in operation, combustion gases generated within combustors 116 are channeled downstream towards turbine section 108. After impinging turbine buckets 124, thermal energy in the combustion gases is converted to mechanical rotational energy used to rotatably drive rotor assembly 112. Turbine section 108 drives compressor section 104 and/or load 120 via drive shaft 114, and exhaust gases are discharged through exhaust section 110 to ambient atmosphere. Alternatively, at least a portion of the exhaust gases are channeled to at least one of a heat recovery steam generator (HRSG), and any other energy recovery device and any industrial processes suitable for using the exhaust gases and the heat energy therein.

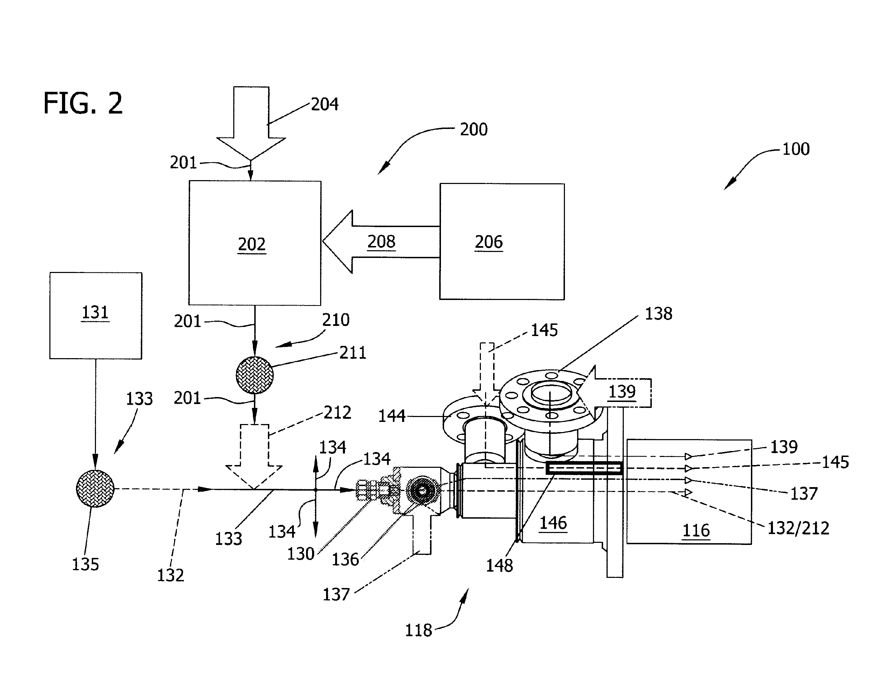

FIG. 2 is a schematic diagram of an exemplary additive injection system 200 that may be used with gas turbine engine 100 (shown in FIG.1). In the exemplary embodiment, injection system 200 is coupled in flow communication with fuel nozzle assembly 118. Moreover, in the exemplary embodiment, a liquid fuel connection 130 is coupled in flow communication with at least one liquid fuel source 131 to enable liquid fuel to be selectively channeled to assembly 118 via a liquid fuel manifold 133 as indicated by flow arrows 132 in FIG. 2. Further, in the exemplary embodiment, liquid fuel manifold 133 is coupled to a plurality of fuel nozzle assemblies 118 (only one shown) via associated liquid fuel connections 130 (only one shown) and a plurality of liquid fuel headers 134 coupled in flow communication with manifold 133. Alternatively, connections 130 are coupled to fuel headers 134 via any fuel conduit configuration and orientation that enables operation of gas turbine engine 100 as described herein including, but not limited to, a ring manifold (not shown).

In the exemplary embodiment, liquid fuel manifold 133 includes pressure and flow control devices 135 such as, but not limited to, flow control valves, check valves, isolation valves, and electronic control system interfaces (neither shown). Also, in the exemplary embodiment, the fuel supplied from source 131 is a carbonaceous liquid such as, but not limited to, number 2 fuel oil. Alternatively, the fuel may be any liquid fuel that enables operation of additive injection system 200 and gas turbine engine 100 as described herein including, but not limited to, distillate and/or residual oils. Also, alternatively, fuel connection 130 may be configured to channel a gaseous fuel, wherein the fuel may be any gaseous fuel that enables operation of additive injection system 200 and gas turbine engine 100 as described herein including, but not limited to, natural gas and syngas.

Moreover, in the exemplary embodiment, at least one water injection connection 136 is coupled in flow communication with at least one pressurized water source (not shown) to enable pressurized water to be selectively channeled to assembly 118 as illustrated in FIG. 2 by flow arrows 137. In the exemplary embodiment, the water channeled from the water source is demineralized water that is used for emissions control, for example, control of nitrogen oxides (NOₓ). Alternatively, any liquid that enables operation of gas turbine engine 100 as described herein may be used. Also, alternatively, fuel nozzle assembly 118 has no water injection connection 136.

Furthermore, in the exemplary embodiment, a gaseous fuel connection 138 is coupled in flow communication with at least one gaseous fuel source (not shown) to enable gaseous fuel to be selectively channeled to assembly 118 as illustrated in FIG. 2 by gaseous fuel flow arrows 139. In the exemplary embodiment, the fuel is a carbonaceous gas such as, but not limited to, a natural gas. Alternatively, the fuel supplied to assembly 118 may be any gaseous fuel that enables operation of gas turbine engine 100 as described herein including, but not limited to, a syngas. Also, alternatively, fuel nozzle assembly 118 includes no gaseous fuel connection 138 and no gaseous fuels are used.

Moreover, in the exemplary embodiment, fuel nozzle assembly 118 is coupled in flow communication with an atomizing air source (not shown) via an atomizing air connection 144. The atomizing air source may include a portion of pressurized air channeled from compressor section 104 (shown in FIG. 1) and/or an independent source such as, but not limited to, an atomizing air tank and/or an auxiliary industrial air system. Further, in the exemplary embodiment, fuel nozzle assembly 118 includes a fuel nozzle body 146 that includes an atomizing air channel assembly 148 coupled in flow communication with atomizing air connection 144. Channel assembly 148 atomizes a mixture channeled through fuel nozzle body 146 to facilitate mixing fuel and air within combustor 116. Also, alternatively, fuel nozzle assembly 118 includes no atomizing air connection 144 and no atomizing air is used.

In the exemplary embodiment, additive injection system 200 includes an existing water supply manifold 201 that is coupled in flow communication with a water source (not shown) and liquid fuel manifold 133, such coupling being at least partially representative of an existing configuration. System 200 also includes an additive-water mixture source 202 that receives water 204 from the water source and a water-soluble additive 208 from a water-soluble additive source 206. Alternatively, water 204 is channeled to additive source 206 and/or additive 208 to dilute the additive with water prior to and/or during channeling of additive from additive source 206 to mixture source 202. In the exemplary embodiment, a portion of existing manifold 201 is removed and source 202 is inserted in place of the removed portion of manifold 201. Also, in the exemplary embodiment, any water-soluble additive may be used, such as, but not limited to, smoke-reducing additives and/or vanadium inhibiting additives. Additive injection system 200 also includes an additive-water mixture manifold 210 that includes a portion of existing water supply manifold 201. Additive-water mixture manifold 210 also includes a plurality of pressure and flow control devices 211 such as, but not limited to, flow control valves, check valves, isolation valves, and/or electronic control system interfaces (neither shown). In some embodiments, manifold 210 is also coupled to pressure and flow control devices 211/135 with liquid fuel manifold 133.

Additive-water mixture source 202 is coupled in flow communication with fuel nozzle assembly 118 via manifold 210, including a portion of existing water supply manifold 201 and pressure and flow control devices 211, liquid fuel manifold 133, and liquid fuel connection 130. Alternatively, additive-water mixture manifold 210 is coupled in flow communication directly with liquid fuel connection 130. Also, alternatively, additive-water mixture manifold 210 is coupled in flow communication with liquid fuel manifold at any point between liquid fuel source 131 and liquid fuel connection 130. Further, alternatively, additive-water mixture manifold 210 is coupled in flow communication with fuel nozzle assembly 118 via water injection connection 136.

In operation, liquid fuel is channeled from fuel source 131 to fuel nozzle assembly 118 via liquid fuel manifold 133 for use in injection of atomized liquid fuel during operation of gas turbine engine 100. In the exemplary embodiment, during normal operations of gas turbine engine 100, water-soluble additives are channeled to fuel nozzle assembly 118 for mixing with air within combustor 116. Specifically, water 204 and additive 208 are channeled into additive-water source 202 at predetermined flow values that enable a predetermined additive concentration to be obtained. Alternatively, water 204 is channeled to additive source 206 and/or additive 208 to dilute the additive with water prior to and/or during channeling of additive from additive source 206 to mixture source 202. Moreover, the pressures and flow rates of additive-water mixture 212 from source 202 are selected to enable predetermined pressure and flow values to be channeled into fuel nozzle assembly 118. In the exemplary embodiment, additive-water mixture manifold 210 uses pressure and flow control devices 211 to facilitate controlling pressures and flows.

Therefore, in the exemplary embodiment, in operation, additive-water mixture flow 212 is channeled into liquid fuel manifold 133 via flow control devices 211 and a portion of existing water supply manifold 201 to mix additive-water mixture 212 with liquid fuel flow 132. A fuel-additive-water mixture (not shown) is channeled into fuel nozzle assembly 118 via liquid fuel connection 130. Specifically, the fuel-additive-water mixture is channeled into fuel nozzle body 146 and then into combustor 116. Once the fuel-additive-water mixture is within combustor 116, fuel is combusted, water is vaporized, and the remaining additive is channeled from combustor 116 towards turbine section 108. Alternatively, in operation, if only liquid fuel is selectively determined necessary by an operator, flow from system 200 is suspended and liquid fuel flow is maintained. Also, alternatively, in operation, liquid fuel flow 132 may be suspended within liquid fuel manifold 133 and additive-water mixture flow 212 from additive-water mixture manifold 210 is maintained to facilitate delivery of additive-water mixture 212 through fuel nozzle assembly 118 into combustors 116 and into turbine section 108 (shown in FIG. 1).

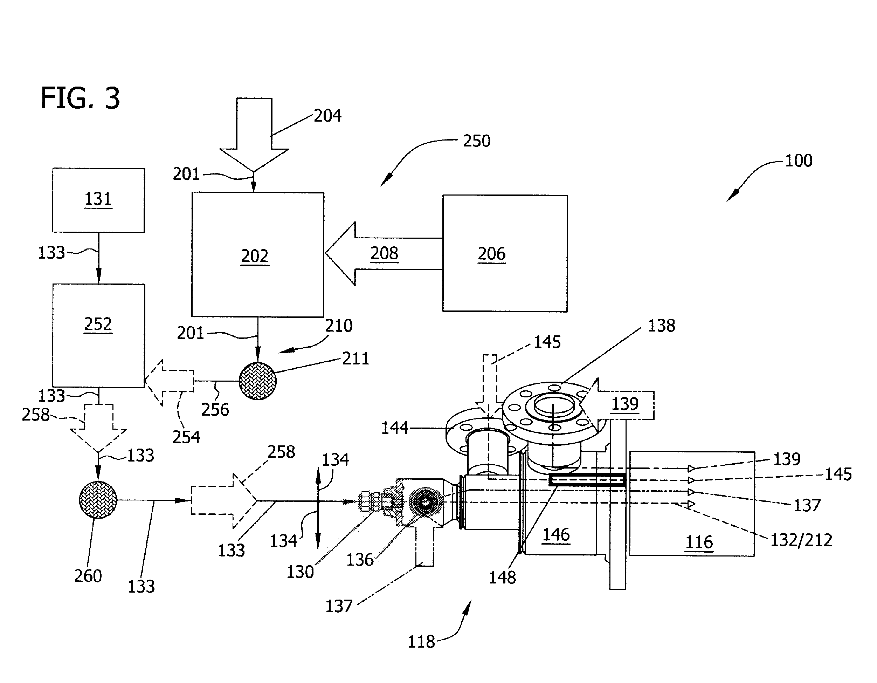

FIG. 3 is a schematic diagram of an exemplary alternative additive injection system 250 that may be used with gas turbine engine 100. In this alternative exemplary embodiment, system 250 is similar to system 200 and the exceptions are discussed as follows. System 250 includes a mixing tank 252 that is coupled in flow communication with liquid fuel source 131 via existing liquid fuel manifold 133. In this exemplary alternative embodiment, a portion of existing manifold 133 is removed and mixing tank 252 is inserted in place of the removed portion of existing manifold 133. Also, in this exemplary alternative embodiment, an additive-water mixture flow 254 is channeled into mixing tank 252 via an additive-water mixture conduit 256 that is coupled in flow communication with pressure and flow control devices 211. Fuel, additive, and water are mixed within tank 252 via any mixing mechanism that enables operation of system 250 and gas turbine engine 100 as described herein. A fuel-additive-water mixture flow 258 is channeled to a plurality of pressure and flow control devices 260 that are configured to control flow 258 and are coupled in flow communication with mixing tank 252 via existing manifold 133. Flow 258 is further channeled to liquid fuel connection 130 via existing manifold 133. In this exemplary alternative embodiment, a substantial portion of existing manifold 133 is a substantially straight run of piping, thereby facilitating eliminating redundant piping systems and reducing capital construction and retrofit costs, especially in existing units wherein space is limited.

In other alternative embodiments, additive-water flow 212 is injected into fuel in any manner that enables operation of systems 200 and 250 as described herein. Also, in other alternative embodiments, additive injection system 200 (shown in FIG. 2) and alternative additive injection system 250 (shown in FIG. 3) may be embedded within any combustion system that uses injected substances to facilitate a combustion process including, but not limited to, oil-fired and gas-fired burners in commercial and residential boilers and furnaces.

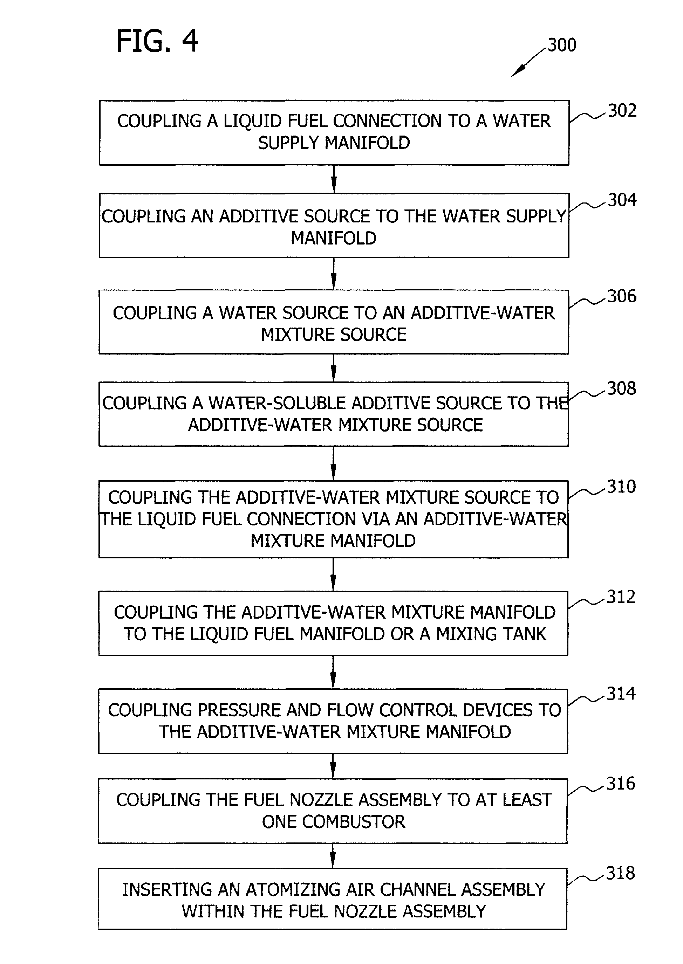

FIG. 4 is a flow chart illustrating an exemplary method 300 of assembling additive injection system 200 (shown in FIG. 2) and/or alternative additive injection system 250 (shown in FIG. 3). In the exemplary embodiment, liquid fuel connection 130 (shown in FIGs. 2 and 3) is coupled 302 to water supply manifold 201 (shown in FIGs. 2 and 3). Additive sources 202/206 (both shown in FIGs. 2 and 3) are coupled 304 to water supply manifold 201. Water source 204 is coupled 306 to additive-water mixture source 202 (both shown in FIGs. 2 and 3). Water-soluble additive source 206 (shown in FIGs. 2 and 3) is coupled 308 to additive-water mixture source 202. Additive-water mixture source 202 is coupled 310 to liquid fuel connection 130 via additive-water mixture manifold 210 (shown in FIGs. 2 and 3). Additive-water mixture manifold 210 is coupled 312 to liquid fuel manifold 133 (shown in FIG. 2) or coupled to mixing tank 252 (shown in FIG. 3). Moreover, pressure and flow control devices 211 (shown in FIGs. 2 and 3) are coupled 314 to additive-water mixture manifold 210 and fuel nozzle assembly 118 is coupled 316 to at least one combustor 116, and atomizing air channel assembly 148 is inserted 318 within fuel nozzle assembly 118.

Embodiments provided herein facilitate injection of additives into gas turbine engines using as much existing infrastructure as reasonable. Such additives may include inhibitors that may be injected into the combustion gas stream to inhibit deposit-induced corrosion and/or combustion byproduct formation. Using existing infrastructure to inject additives reduces use of additional hardware to control inhibitor concentration and to inject the inhibitor, thereby eliminating redundant piping systems and reducing capital construction and retrofit costs, especially in existing units wherein space is limited. Also, using existing infrastructure to inject additives reduces operational costs associated maintaining redundant piping systems.

Described herein are exemplary embodiments of methods and apparatus that facilitate injection of additives into gas turbine engines. Specifically, coupling an additive injection system to an existing water supply manifold that is coupled to a fuel nozzle assembly reduces capital construction costs. More specifically, using existing components, including sharing of existing flow and pressure control devices, reduces capital costs of materials and installation labor. Also, selecting additive concentrations that complement existing delivery infrastructure facilitates additive injection operations while eliminating redundant piping systems. Moreover, using existing delivery infrastructure facilitates reducing costs of retrofits of existing gas turbine engines.

The methods and systems described herein are not limited to the specific embodiments described herein. For example, components of each system and/or steps of each method may be used and/or practiced independently and separately from other components and/or steps described herein. In addition, each component and/or step may also be used and/or practiced with other assembly packages and methods.

While the invention has been described in terms of various specific embodiments, those skilled in the art will recognize that the invention can be practiced with modification within the spirit and scope of the claims.

Various aspects and embodiments of the present invention are defmed by the following numbered clauses:
1. A method for assembling an additive injection system for use with a turbine engine, said method comprising:
   coupling a liquid fuel connection in flow communication with a water supply manifold; and
   coupling an additive source in flow communication with the water supply manifold.
2. A method in accordance with Clause 1 further comprising at least one of:
   coupling an additive-water mixture manifold to a liquid fuel manifold;
   coupling the additive-water mixture manifold to the liquid fuel connection; and
   coupling the additive-water mixture manifold to a mixing tank,
   wherein the additive-water mixture manifold includes at least a portion of the water supply manifold.
3. A method in accordance with Clause 1, wherein coupling an additive source in flow communication with the water supply manifold comprises:
   coupling a water source to an additive-water mixture source;
   coupling a water-soluble additive source to the additive-water mixture source; and
   coupling the additive-water mixture source to the liquid fuel connection.
4. A method in accordance with Clause 3, wherein coupling the additive-water mixture source to the liquid fuel connection comprises coupling the additive-water mixture manifold to the additive-water mixture source and to the liquid fuel connection.
5. A method in accordance with Clause 4, wherein coupling the additive-water mixture manifold to the additive-water mixture source and to the liquid fuel connection comprises coupling at least one of a pressure control device and a flow control device to the additive-water mixture manifold.
6. A method in accordance with Clause 1 further comprising coupling the fuel nozzle assembly to at least one combustor.
7. A method in accordance with Clause 6 further comprising coupling an atomizing air connection to the fuel nozzle assembly and positioning at least one atomizing air channel assembly in the fuel nozzle assembly.
8. An additive injection system comprising:
   a water supply manifold;
   a liquid fuel connection coupled in flow communication with said water supply manifold; and
   an additive source coupled in flow communication with said water supply manifold.
9. An additive injection system in accordance with Clause 8, wherein said additive source is configured to receive a water-soluble additive.
10. An additive injection system in accordance with Clause 8 further comprising at least one of:
   an additive-water mixture manifold coupled to a liquid fuel manifold;
   said additive-water mixture manifold coupled to said liquid fuel connection; and
   said additive-water mixture manifold coupled to a mixing tank,
   wherein said additive-water mixture manifold comprises at least a portion of said water supply manifold.
11. An additive injection system in accordance with Clause 10 further comprising:
   a water source coupled to an additive-water mixture source; and
   said additive source coupled to said additive-water mixture source.
12. An additive injection system in accordance with Clause 11 further comprising said additive-water mixture source coupled to said liquid fuel connection via said additive-water mixture manifold.
13. An additive injection system in accordance with Clause 12, wherein said additive-water mixture manifold comprises at least one of a pressure control device and a flow control device.
14. An additive injection system in accordance with Clause 8 further comprising:
   said liquid fuel connection coupled to a fuel nozzle assembly;
   an atomizing air connection coupled to said fuel nozzle assembly;
   said fuel nozzle assembly coupled to at least one combustor; and
   at least one atomizing air channel assembly positioned in said fuel nozzle assembly.
15. A turbine engine comprising:
   at least one combustor;
   at least one fuel nozzle assembly coupled in flow communication with said at least one combustor; and
   an additive injection system coupled in flow communication with said at least one fuel nozzle assembly, said additive injection system comprising:
      a water supply manifold;
      a liquid fuel connection coupled in flow communication with said water supply manifold; and
      an additive source coupled in flow communication with said water supply manifold.
16. A turbine engine in accordance with Clause 15 further comprising at least one of:
   an additive-water mixture manifold coupled to a liquid fuel manifold;
   said additive-water mixture manifold coupled to said liquid fuel connection; and
   said additive-water mixture manifold coupled to a mixing tank,
   wherein said additive-water mixture manifold comprises at least a portion of said water supply manifold.
17. A turbine engine in accordance with Clause 16 further comprising:
   a water source coupled to an additive-water mixture source; and
   said additive source coupled to said additive-water mixture source.
18. A turbine engine in accordance with Clause 17 further comprising said additive-water mixture source coupled to said liquid fuel connection via said additive-water mixture manifold.
19. A turbine engine in accordance with Clause 18 wherein said additive-water mixture manifold comprises at least one of a pressure control device and a flow control device.
20. A turbine engine in accordance with Clause 15 further comprising:
   an atomizing air connection coupled to said fuel nozzle assembly; and
   at least one atomizing air channel assembly positioned in said at least one fuel nozzle assembly.

## Claims

1. An additive injection system (200) comprising:
a water supply manifold (201);
a liquid fuel connection (130) coupled in flow communication with said water supply manifold; and
an additive source (206) coupled in flow communication with said water supply manifold.

2. An additive injection system (200) in accordance with Claim 1, wherein said additive source (206) is configured to receive a water-soluble additive (208).

3. An additive injection system (200) in accordance with Claim 1 or 2 further comprising at least one of:
an additive-water mixture manifold (210) coupled to a liquid fuel manifold (133);
said additive-water mixture manifold coupled to said liquid fuel connection; and
said additive-water mixture manifold coupled to a mixing tank (252),
wherein said additive-water mixture manifold comprises at least a portion of said water supply manifold (201).

4. An additive injection system (200) in accordance with Claim 3 further comprising:
a water source (204) coupled to an additive-water mixture source (202); and
said additive source (206) coupled to said additive-water mixture source.

5. An additive injection system (200) in accordance with Claim 4 further comprising said additive-water mixture source (202) coupled to said liquid fuel connection (130) via said additive-water mixture manifold (210).

6. An additive injection system (200) in accordance with Claim 5, wherein said additive-water mixture manifold (210) comprises at least one of a pressure control device and a flow control device (211).

7. An additive injection system (200) in accordance with any of the preceding Claims further comprising:
said liquid fuel connection (130) coupled to a fuel nozzle assembly (118);
an atomizing air connection (144) coupled to said fuel nozzle assembly;
said fuel nozzle assembly coupled to at least one combustor (116); and
at least one atomizing air channel assembly (148) positioned in said fuel nozzle assembly.

8. A turbine engine (100) comprising:
at least one combustor (106/116);
at least one fuel nozzle assembly (118) coupled in flow communication with said at least one combustor; and
an additive injection system (200) coupled in flow communication with said at least one fuel nozzle assembly, said additive injection system in accordance with any of the preceding claims.

9. A turbine engine (100) in accordance with Claim 8 further comprising at least one of:
an additive-water mixture manifold (210) coupled to a liquid fuel manifold (133);
said additive-water mixture manifold coupled to said liquid fuel connection; and
said additive-water mixture manifold coupled to a mixing tank (252),
wherein said additive-water mixture manifold comprises at least a portion of said water supply manifold (201).

10. A turbine engine (100) in accordance with Claim 9 further comprising:
a water source (204) coupled to an additive-water mixture source (202); and
said additive source (206) coupled to said additive-water mixture source.

11. A method for assembling an additive injection system for use with a turbine engine, said method comprising:
coupling a liquid fuel connection in flow communication with a water supply manifold; and
coupling an additive source in flow communication with the water supply manifold.

12. A method in accordance with Claim 11 further comprising at least one of:
coupling an additive-water mixture manifold to a liquid fuel manifold;
coupling the additive-water mixture manifold to the liquid fuel connection; and
coupling the additive-water mixture manifold to a mixing tank,
wherein the additive-water mixture manifold includes at least a portion of the water supply manifold.

13. A method in accordance with Claim 11 or 12, wherein coupling an additive source in flow communication with the water supply manifold comprises:
coupling a water source to an additive-water mixture source;
coupling a water-soluble additive source to the additive-water mixture source; and
coupling the additive-water mixture source to the liquid fuel connection.

14. A method in accordance with Claim 13, wherein coupling the additive-water mixture source to the liquid fuel connection comprises coupling the additive-water mixture manifold to the additive-water mixture source and to the liquid fuel connection.

15. A method in accordance with Claim 14, wherein coupling the additive-water mixture manifold to the additive-water mixture source and to the liquid fuel connection comprises coupling at least one of a pressure control device and a flow control device to the additive-water mixture manifold.
